# FASCICULE DE BREVET EUROPEEN

(11) **EP 1 877 262 B1**
(45) Date de publication et mention de la délivrance du brevet: **11.04.2012**
(21) Numéro de dépôt: 06754839.6
(22) Date de dépôt: 25.04.2006
(51) Int. Cl.: B41M 7/00, B42D 15/10, B41M 5/24

(54) **MARQUAGE DE CARTE PAR LASER**
VERFAHREN ZUR LASERMARKIERUNG EINER KARTE
METHOD FOR THE LASER MARKING OF A CARD

(30) Priorité: 29.04.2005 FR 0504363
(43) Date de publication de la demande: 16.01.2008
(73) Titulaire: Gemalto SA, 92190 Meudon (FR)
(72) Inventeur: LESUR, Jean-Luc, F-83149 Bras (FR)
(74) Mandataire: Grevin, Emmanuel
(86) Numéro de dépôt international: PCT/EP2006/061815
(87) Numéro de publication internationale: WO 2006/117312

(56) Documents cités:
- EP-A- 0 987 121
- DE-A1- 4 315 339
- US-A- 5 340 628
- US-A- 5 994 024
- US-A1- 2002 022 112
- US-A1- 2004 198 858
- PATENT ABSTRACTS OF JAPAN vol. 014, no. 579 (M-1063), 25 décembre 1990 (1990-12-25) & JP 02 251438 A (MITSUBISHI METAL CORP), 9 octobre 1990 (1990-10-09)

## Description

La présente invention concerne un procédé de marquage par laser d'un support plastique comprenant un corps et une feuille de recouvrement.

Plus particulièrement, l'invention est relative à la personnalisation graphique par effet thermique ou effet de carbonisation d'une surface d'un support par l'énergie thermique véhiculée par un faisceau laser.

Sans que cela constitue une limitation de l'invention, les supports plastiques concernés par l'invention peuvent être en particulier des cartes plastiques (cartes du type carte de paiement, d'identification, carte téléphonique, etc...).

On précise que des cartes plastiques sont obtenues en laminant ensemble plusieurs couches ou feuilles de matériau :
- Le corps de carte, qui constitue un ensemble de feuilles comportant notamment une feuille dite « coeur » de carte, ou une feuille (au cas où le corps est réduit au coeur) relativement épaisse (donnant une épaisseur de l'ordre du mm). Ce corps est dans le cas des cartes plastiques généralement constitué en PVC (polyvinyle Chlorure) ou PET (polyéthylène), ou encore en PC (polycarbonate),
- Une feuille de recouvrement peu épaisse (de l'ordre de quelques dizaines voire quelques centaines de microns) collée sur la surface du corps. Cette feuille de recouvrement est appelée « overlay » selon la terminologie anglosaxonne répandue, et les deux termes seront utilisés indifféremment dans ce texte. Elle est généralement transparente,
- Et dans certains cas une couche adhésive intermédiaire entre le corps et la feuille de recouvrement. Cette couche adhésive est destinée notamment à solidariser le corps et la feuille de recouvrement.

Comme on va le voir, l'invention s'applique de manière particulièrement avantageuse aux supports du type carte plastique, dont le corps et/ou l'overlay est réalisé en une matière plastique dont le point de ramollissement est bas.

On précise que le « point de ramollissement » correspond à la température à laquelle la matière plastique se met à fluer, sous pression atmosphérique.

Dans le cadre du présent texte un point de ramollissement « bas » est défini comme correspondant à une température inférieure à 100°C. Des matières plastiques telles que le PVC ou le PET sont des exemples de matières plastiques dont le point de ramollissement est bas (de l'ordre de 70°C).

Et une matière telle que le polycarbonate (PC) est au contraire une matière plastique dont le point de ramollissement est « haut » (de l'ordre de 140°C).

Il est déjà connu de réaliser un marquage par laser d'un support plastique comprenant un corps et une feuille de recouvrement - notamment dans le domaine des cartes plastiques.

Un tel marquage laser de cartes plastiques permet notamment de personnaliser les cartes une fois que les différentes couches ou feuilles de celles-ci ont été laminées ensemble.

Un tel marquage est réalisé en attaquant avec le faisceau d'un laser la surface du support.

Le matériau de la feuille de recouvrement peut être choisi pour ne pas être altéré de manière sensible par cette attaque du faisceau.

Dans ce cas le matériau de la feuille de recouvrement est donc transparent pour le faisceau laser, et seule la surface du corps du support est altérée par le faisceau laser (cette surface est appelée « coeur » dans le cas d'une carte).

Alternativement, il est également possible de choisir des matériaux constituant la carte qui contribuent à obtenir un aspect visuel spécifique après l'attaque du faisceau laser.

A cet égard, le matériau de la feuille de recouvrement peut être choisi pour obtenir une personnalisation laser adaptée au support fabriqué. Ce matériau peut notamment être dopé avec une matière (cas d'un mélange), ou avec des particules, plus ou moins sensibles au laser, dans le but d'améliorer le rendu du marquage

Dans ce cas, le matériau de la feuille de recouvrement contribue au marquage.

Après avoir traversé l'épaisseur de la feuille de recouvrement (et de la couche de revêtement si elle est présente), le faisceau attaque donc la surface du corps qui est tournée vers la feuille de recouvrement.

Pour réaliser une telle attaque, il est possible d'utiliser différents types de laser.

On indique cependant que la fonction que doit remplir le faisceau laser est essentiellement d'apporter au corps du support une énergie thermique suffisante pour altérer et colorer sa surface. Et pour une telle fonction un laser YAG est le type de laser le mieux adapté.

Cette attaque de la surface du corps produit ainsi par effet thermique une coloration locale de ladite surface, au lieu d'impact du faisceau du laser. Cette coloration tend à noircir localement la surface du corps (effet de carbonisation de surface, effet de brûlage, sans altérer sensiblement les propriétés mécaniques du matériau - par exemple en provoquant des crevasses ou des cratères qui auraient pu être produits par une trop forte énergie du laser).

Il est également possible que la feuille de recouvrement soit également noircie par cette attaque (cas où le matériau de cette feuille est altéré par le faisceau laser).

Il est généralement désiré d'obtenir une coloration la plus sombre possible.

Le niveau de « noirceur » de la coloration obtenue par l'attaque du laser constitue ainsi un critère qualitatif du marquage - et on précise qu'on fait référence à ce critère par l'appellation de « densité de marquage ». Une densité de marquage très importante traduit ainsi un marquage très sombre, ce qui est recherché.

On définit dans le cadre de ce texte un marquage « haute densité » comme un marquage ayant une densité supérieure à 1 Db.

On rappelle que la densité de noir en Db est donnée par la formule : log₁₀^{(1 / R)} où R= Φ₁ / Φ₀ (où Φ₀ = Flux lumineux avant l'échantillon, Φ₁ =Flux lumineux après l'échantillon) - voir à cet égard le standard densitométrique DIN 16536.

En répétant l'attaque par le faisceau d'un laser en différents endroits de la surface du corps, on peut obtenir tout motif visuel désiré. Il est ainsi possible d'inscrire sur le corps de la carte des caractères, ou une figure quelconque (on peut typiquement obtenir avec un laser une résolution de l'ordre de 300 à 600 dpi - cette résolution peut atteindre plusieurs milliers de Dpi dans certaines conditions - et il est donc possible de reproduire à partir de points d'impact d'un faisceau laser par exemple des images photographiques sur le corps d'une carte plastique d'identification).

Ce type de marquage laser de cartes plastiques qui vient d'être décrit est bien connu et décrit notamment dans les documents US 2002/022112, US2004/0198858, DE4315339 et US5, 994, 024.

Comme cela a été dit, le marquage laser est mis en oeuvre dans la fabrication de cartes plastiques, notamment pour personnaliser graphiquement les cartes une fois que la feuille de recouvrement a été appliquée.

Le marquage d'un support (tel qu'une carte) par un laser constitue ainsi une disposition avantageuse.

Cependant, une limitation est associée à un tel marquage.

On a en effet observé qu'il existait pour chaque structure de carte laminée une énergie de faisceau laser absorbée par unité de surface de la carte, au delà de laquelle se produisent des déformations de la feuille de recouvrement.

Ces déformations correspondent notamment à une modification de l'état de la matière du corps et/ou de la feuille de recouvrement, voire à des décollements de la feuille de recouvrement dans certains cas.

Ces déformations produisent deux effets indésirables :
- Premièrement, elles ont tendance à éclaircir l'aspect du marquage, lorsqu'on observe le support. Ces déformations diminuent la densité de marquage observée au travers de la feuille de recouvrement.
- Deuxièmement, elles peuvent déformer la géométrie du motif visuel créé par le marquage - ce qui peut notamment se traduire par un problème de netteté de la perception de ce motif pour un observateur.

De telles déformations sont en particulier observées sur des supports dont le corps est en un matériau tel que le PET ou le PVC.

Avec de tels matériaux en effet, les déformations sont susceptibles d'apparaître même avec un faisceau laser de puissance modérée (on peut définir une telle « puissance modérée » comme correspondant à une énergie de 200µJ), dès l'instant où une certaine quantité d'énergie absorbée par unité de surface est dépassée, par exemple par des marquage successifs.

Elles peuvent également apparaître sur des supports dont le corps est en un matériau plus-résistant à la chaleur - par exemple en PC - pour des faisceaux de puissance supérieure.

Le but principal de l'invention est d'améliorer l'aspect visuel (contraste / netteté) d'un marquage laser effectué sur des supports comportant une feuille de recouvrement.

Notamment, ce but est recherché pour des marquages laser grande densité.

Ceci est désiré notamment pour les supports dont le corps est en un matériau ayant une température de ramollissement inférieure à celle du PC (par exemple PET ou PVC).

Et un autre but de l'invention est d'obtenir un support marqué avec une grande netteté.

Un autre but de l'invention est de permettre d'obtenir des supports marqués par laser (notamment par marquage grande densité) et ne comportant pas de déformations telles que mentionnées ci-dessus.

Un autre but encore est d'obtenir ces avantages avec un procédé de type industriel, simple et peu onéreux.

Afin d'atteindre ces buts, l'invention propose un procédé de marquage par laser d'un support comprenant un corps et une feuille de recouvrement selon la revendication 1, ledit procédé comprenant l'attaque par le faisceau d'un laser du corps du support à travers l'épaisseur de la feuille de recouvrement, procédé comprenant une étape de lamination du support pendant ou après le marquage au laser pour réduire ou éviter des déformations de la feuille de recouvrement résultant de ladite attaque.

Des aspects préférés, mais non limitatifs du procédé selon l'invention sont les suivants :
- ledit support est un support plastique,
- ladite lamination est réalisée par des moyens de lamination statique,
- ladite lamination est réalisée en même temps que ladite attaque par laser, le faisceau du laser traversant lesdits moyens de lamination,
- ladite lamination est réalisée par pressage statique du support entre des plaques de lamination,
- ladite lamination est réalisée à une température supérieure à la température de ramollissement d'au moins une des matières qui est au contact du marquage laser,
- ladite lamination est réalisée par des moyens de lamination dynamique permettant la lamination du support pendant que celui-ci défile par rapport auxdits moyens de lamination,
- ladite lamination est réalisée par pressage entre deux rouleaux, le support défilant entre lesdits rouleaux.

Selon un autre aspect, l'invention propose également une application d'un procédé selon une des revendications précédentes au marquage d'un support comprenant un corps et une feuille de recouvrement, et dont le corps et/ou la feuille de recouvrement est (sont) en un matériau dont la température de ramollissement est inférieure à celle du PC.

Des aspects préférés, mais non limitatifs de cette application sont les suivants :
- ledit matériau du corps a une température de ramollissement inférieure à 140°C,
- ledit matériau du corps est du PET ou du PVC.

D'autres aspects, buts et avantages de l'invention apparaîtront mieux à la lecture de la description suivante de l'invention, faite en référence aux dessins annexés sur lesquels :

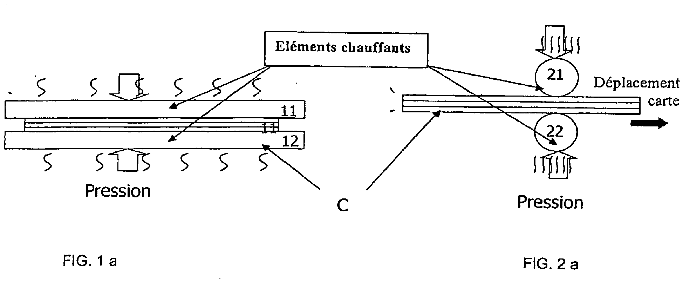

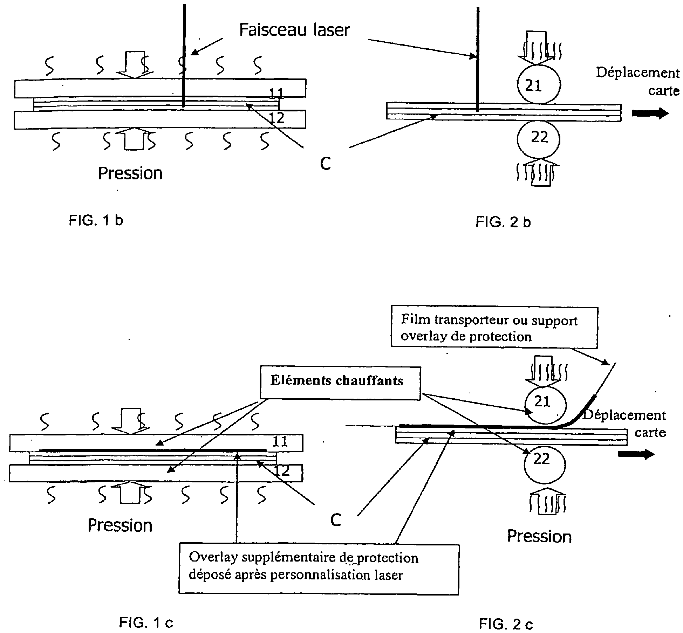

- La figure 1 est une représentation schématique de l'étape de lamination d'un support, selon un premier mode de mise en oeuvre de l'invention,
   ○ La figure 1a correspondant à une première variante de ce mode, (lamination simple après personnalisation laser),
   ○ La figure 1b correspondant à une deuxième variante (lamination durant l'étape de personnalisation laser),
   ○ La figure 1c correspondant à une troisième variante (lamination effectuée en même temps que la dépose d'un overlay de protection).
- La figure 2 est une représentation schématique de l'étape de lamination d'un support, selon un deuxième mode de mise en oeuvre de l'invention,
   o La figure 2a correspondant à une première variante de ce mode, (lamination simple après personnalisation laser),
   o La figure 2b correspondant à une deuxième variante (lamination durant l'étape de personnalisation laser, et marquage laser à la volée durant le déplacement du support),
   o La figure 2c correspondant à une troisième variante (lamination effectuée en même temps que la dépose d'un overlay de protection).
- La figure 3 illustre les différences d'aspect visuel entre un support dont le corps et l'overlay sont en PC (figure 3a) et un support dont le corps est en PET et l'overlay en PVC (PET/PVC) (figure 3b), les deux types de carte ayant subi le même procédé de marquage laser selon l'état de la technique,
- La figure 4 illustre l'effet de la mise en oeuvre de l'invention - notamment en termes de densité de marquage et de netteté - en illustrant l'aspect visuel observé par binoculaire de supports obtenus :
   ➢ Par un procédé de marquage par laser selon l'état de la technique, sur un support dont le corps est en PC (figure 4a),
   ➢ Par un procédé de marquage par laser selon l'état de la technique, sur un support dont le corps est en PET/PVC (figure 4b),
   ➢ Par un procédé de marquage par laser selon l'invention, sur trois supports dont le corps est en PET/PVC (figures 4c à 4e),

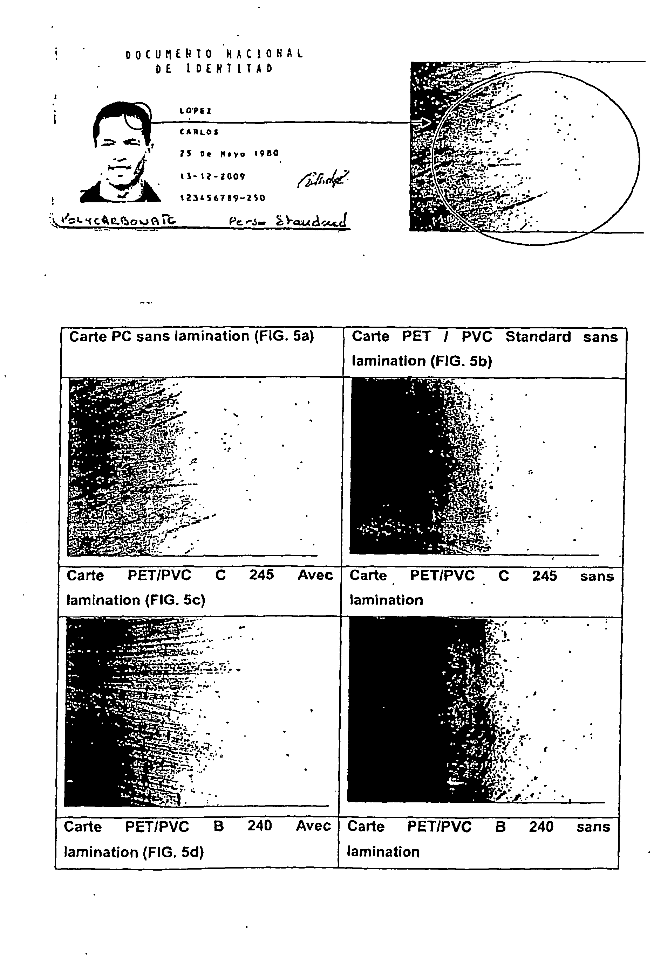

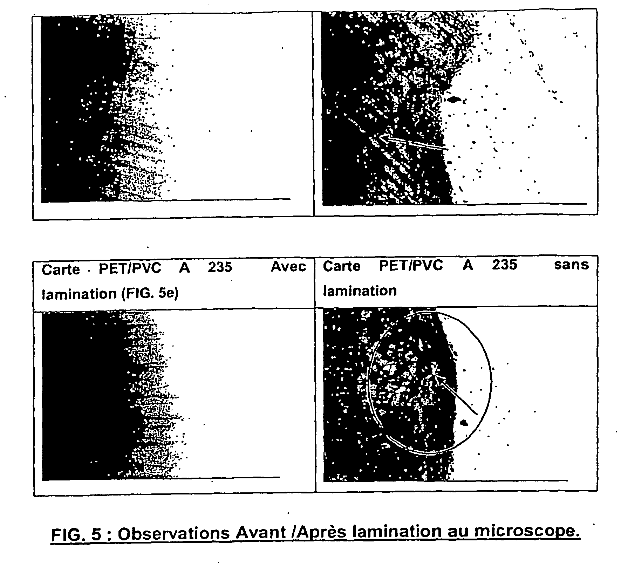

- La figure 5 illustre l'effet de la mise en oeuvre de l'invention - notamment en termes de déformation - en illustrant l'aspect visuel observé par microscope de supports obtenus :
   ➢ Par un procédé de marquage par laser selon l'état de la technique, sur un support dont le corps est en PC (figure 5a),
   ➢ Par un procédé de -marquage -par -laser selon l'état de la technique, sur un support dont le corps est en PET/PVC (figure-5b),
   ➢ Par un procédé de marquage par laser selon l'invention, sur trois supports dont le corps est en PET/PVC (figures 5c à 5e),

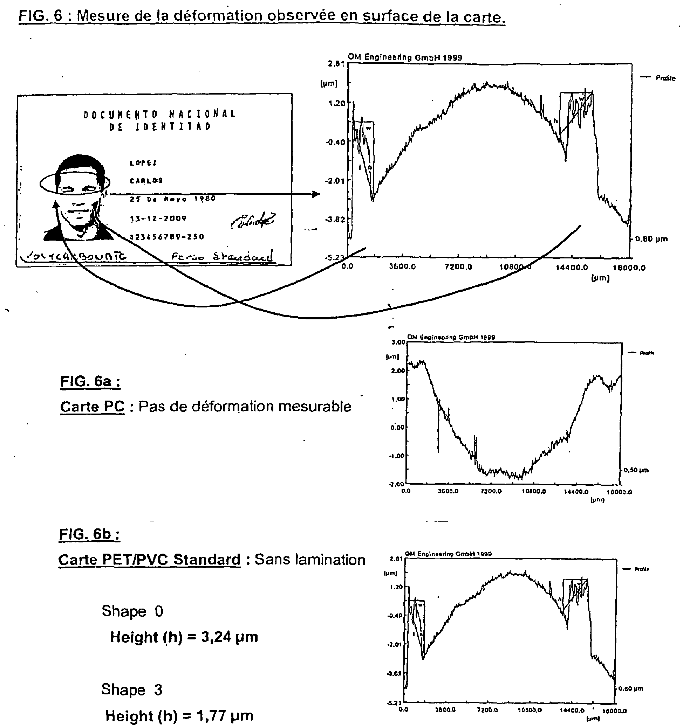

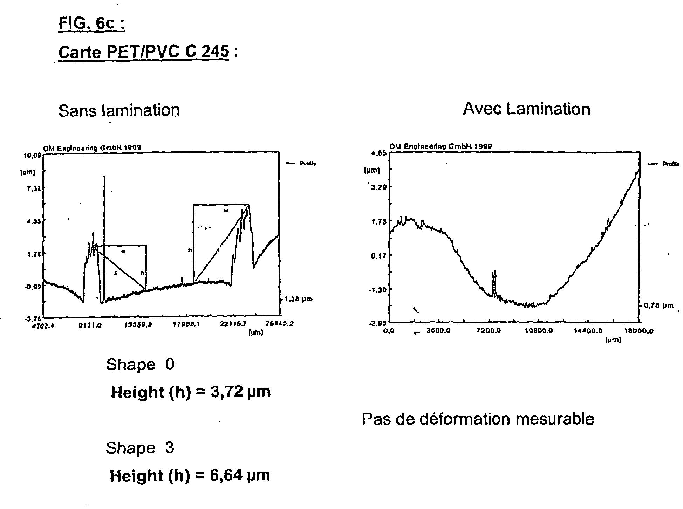

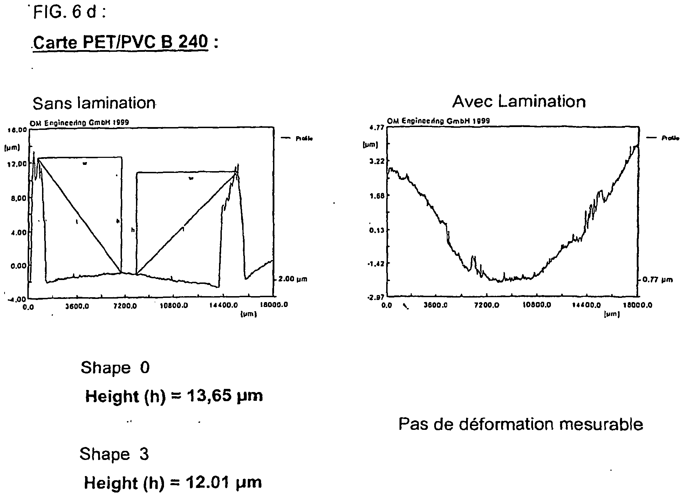

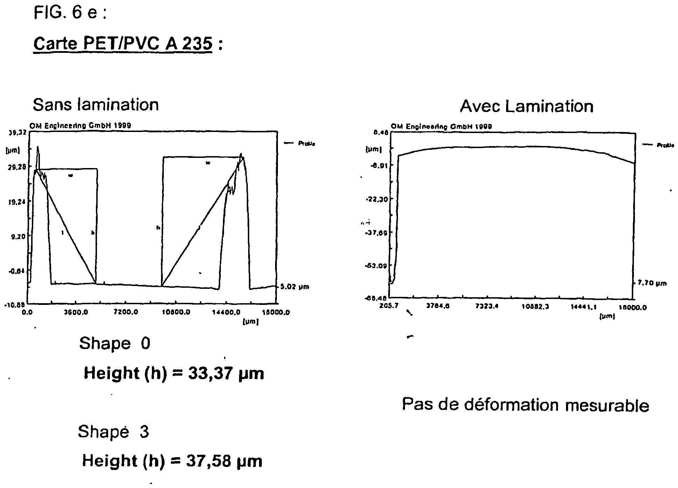

- La figure 6 illustre de manière quantitative une déformation de la surface de supports résultant de la personnalisation laser sans mise en oeuvre de l'invention.

On va maintenant exposer l'invention, en considérant l'exemple d'un support se présentant sous la forme d'une carte plastique et dont le corps est en PC, ou en un matériau dont la température de ramollissement est inférieure à celle du PC - par exemple PET ou PVC.

Une feuille de recouvrement couvre le support pour le protéger ou lui donner un aspect désiré, ou pour comprendre des éléments de sécurité tels qu'un hologramme. Une telle feuille décrite dans les exemples ci-après a une épaisseur comprise entre 50 et 100 µm.

Par commodité, on parlera de carte en PC ou de carte en PET/PVC - bien que le matériau désigne en réalité le corps de la carte.

Naturellement l'invention n'est pas limitée à de tels supports - elle s'applique à tous les types de supports mentionnés en introduction de ce texte.

Toujours par commodité, on utilisera dans la suite de la description indépendamment les termes « carte » et « support ».

### Procédé de marquage par laser

Selon un premier aspect, l'invention concerne un procédé de marquage par laser d'un support plastique comprenant un corps et une feuille de recouvrement, ledit procédé comprenant l'attaque par le faisceau d'un laser du corps du support à travers l'épaisseur de la feuille de recouvrement.

Dans le cas de l'invention, le procédé comprend une étape de lamination du support, pour éviter les déformations de la feuille de recouvrement qui risqueraient d'être générées pendant ladite attaque.

Cette étape de lamination permet en effet d'éviter - ou tout au moins de réduire de manière sensible - les inconvénients mentionnés au début de ce texte.

On précise que par « lamination » d'un support on entend dans ce texte une opération consistant à appliquer une pression sur le support avec ou sans apport de matériaux ou feuilles complémentaires. Cette « lamination » est réalisée à chaud avec apport d'énergie thermique au niveau de la zone de marquage (encore appelée zone marquée). L'énergie thermique permet notamment de faciliter un remodelage de la feuille de recouvrement ou d'améliorer son adhésion au corps.

Cette « lamination » est ainsi distincte des opérations - qui peuvent dans le vocabulaire courant être désignées par le terme de lamination - qui consistent à assembler plusieurs couches ou feuilles pour constituer un support tel qu'une carte ou pour protéger une carte après personnalisation par ajout d'une feuille supplémentaire (afin notamment d'augmenter sa durée de vie, mais aussi la sécurité de l'information vis à vis de la fraude).

La « lamination » est réalisée uniquement sur les régions du support comportant un marquage par laser.

### Lamination statique

La « lamination » peut être réalisée par des moyens de lamination statique (c'est à dire que la « lamination » est pratiquée sur la carte lorsque celle-ci est immobile par rapport aux moyens de lamination).

De tels moyens peuvent par exemple être des plaques chauffantes.

Les figures 1a à 1c illustrent trois variantes de mise en oeuvre de ce mode de réalisation.

Ces figures illustrent ainsi deux plaques 11, 12 entre lesquelles une carte C est pressée à chaud de manière statique.

Dans la variante représentée sur la figure 1a, la lamination et réalisée après l'attaque du laser.

La figure 1b illustre une variante qui permet de raccourcir le temps de mise en oeuvre du procédé.

En effet, dans cette variante on réalise la « lamination » en même temps que l'attaque par laser, en prévoyant que le faisceau du laser traverse les moyens de lamination (par exemple par une fenêtre transparente pratiquée dans ces moyens, ou en employant en regard du faisceau laser de marquage une plaque transparente au faisceau laser).

La figure 1c illustre quant à elle une variante dans laquelle on intercale entre les plaques et le support une couche (ou « overlay ») supplémentaire de protection. Cette couche est déposée sur le support après l'attaque par laser.

La « lamination » peut être effectuée à une température supérieure au point de ramollissement de la matière pendant un temps pouvant dépasser plusieurs secondes. Par exemple pour une carte PET/PVC on pourra procéder à une température de 120°C pendant 10 secondes. Une autre possibilité ayant produit de bons résultats est de mettre en oeuvre cette lamination à une température de 180°C pendant 1 seconde.

### Lamination dynamique

Il est également possible de mettre en oeuvre la « lamination » de manière dynamique - c'est à dire sur une carte en mouvement par rapport aux moyens de lamination.

Les figures 2a à 2c illustrent cette possibilité.

Sur ces figures, la carte C défile de manière continue entre deux rouleaux 21, 22 de lamination, qui sont typiquement chauffants et/ou exercent une pression sur le support.

Ce mode de mise en oeuvre permet de fonctionner selon un procédé continu, ce qui est avantageux.

Dans ce mode de mise en oeuvre, la « lamination » est donc réalisée par des moyens de lamination dynamique permettant la « lamination » du support pendant que celui-ci défile par rapport auxdits moyens de lamination.

On précise que dans le cas d'une lamination et d'un marquage laser réalisés dans le même temps, la lamination peut se faire en même temps que le marquage et sur une autre partie du support (cas de marquage laser à la volée, pendant le déplacement du support).

La figure 2a illustre une première variante dans laquelle la lamination est réalisée après l'attaque du laser.

La figure 2b illustre une deuxième variante dans laquelle la lamination est réalisée pendant l'attaque du laser. Dans ce cas, le faisceau du laser attaque une région du support qui est différente de la région qui est laminée entre les moyens de lamination.

On précise que dans le cas où l'attaque laser est réalisée en même temps que la lamination, l'apport énergétique du laser peut permettre de diminuer le budget thermique apporté au support par les moyens de lamination.

Dans ce cas en effet, il est moins nécessaire (voire plus du tout nécessaire) de prévoir que ces moyens soient chauffants.

Ceci est également applicable à la deuxième variante du premier mode de réalisation (décrit ci-dessus en référence à la figure 1 b).

La figure 2c illustre (de manière similaire à la figure 1c) une variante dans laquelle une couche de protections supplémentaires est déposée sur le support, après l'attaque du laser.

La « lamination » peut être réalisée comme précédemment à une température supérieure au point de ramollissement de la matière, en particulier pour le PET/PVC de 120 à 200°C avec une vitesse de défilement de carte pouvant être réduite à quelques secondes par pouce (typiquement entre 1 et 4 secondes par pouce).

### Précision sur les matériaux et températures de ramollissement

Comme on l'a dit ci-dessus, l'invention s'applique notamment à des supports dont le corps est en un matériau dont la température de ramollissement est inférieure à celle du PC.

Les supports dont le corps est en un matériau dont la température de ramollissement est inférieure à 140°C sont ainsi particulièrement concernés par l'invention - de telles températures de ramollissement étant inférieures à la température de ramollissement du PC.

Les matériaux plastiques ayant de telles températures de ramollissement sont en effet moins onéreux que le PC.

Et l'invention permet leur emploi tout en obtenant des résultats d'une qualité qui correspond à une qualité nécessitant l'emploi de matériaux plus onéreux tels que le PC dans le cas des techniques connues.

L'invention permet ainsi notamment de réaliser des supports marqués de très bonne qualité, en PET ou en PVC.

Et ce qui vient d'être dit à propos du corps du support l'est également pour sa feuille de recouvrement.

### Installation de marquage par laser

L'invention peut être mise en oeuvre par une installation de marquage d'un support plastique comprenant un corps et une feuille de recouvrement, ladite installation comprenant comme cela est connu des moyens de marquage par laser et des moyens d'acheminement de support en regard desdits moyens de marquage.

Dans le cas de l'invention, l'installation comporte donc également des moyens de lamination pour laminer le support et éviter les déformations de la feuille de recouvrement qui risqueraient d'être générées pendant ladite attaque.

Comme on l'a vu, les moyens de lamination peuvent être des moyens de lamination statique, ou des moyens de lamination dynamique.

Dans le cas de moyens de lamination statique, on pourra mettre en oeuvre des plaques.

Et ces moyens de lamination statique - plaques ou autres - pourront être aptes à être traversés par le faisceau des moyens de marquage par laser afin de permettre le marquage par laser pendant la « lamination ».

Il est également possible de mettre en oeuvre des moyens de lamination dynamique permettant la « lamination » du support pendant que celui-ci défile par rapport auxdits moyens de lamination.

Dans ce cas, les moyens de lamination peuvent être des rouleaux.

Dans tous les cas, les moyens de lamination sont typiquement aptes à chauffer et ou presser ledit support. Alternativement, il est possible de prévoir des moyens de chauffage séparés.

### Support obtenu

Le procédé de l'invention permet d'obtenir un support plastique tel qu'une carte comprenant un corps comportant un marquage par laser et une feuille de recouvrement, ledit corps étant en PVC ou en PET, présentant les qualités suivantes :
- le marquage présente une densité de marquage relative supérieure à 1 Db,
- la surface de la feuille de recouvrement présente au repos une planéité Inférieure à 5µm au niveau du marquage (pas de défauts de planéité supérieurs à 5µm - de tels défauts étant illustrés sur la partie droite du graphe de la figure 6, qui correspond à un défaut pouvant survenir lors d'un passage d'une zone de très forte densité à une zone de faible densité).

Ces caractéristiques sont supérieures à ce qui est obtenu pour des cartes PET/PVC avec les procédés de marquage connus.

Une autre manière de caractériser les avantages obtenus par la mise en oeuvre de l'invention est de constater que l'invention permet de fabriquer un support plastique tel qu'une carte comprenant un corps comportant un marquage par laser et une feuille de recouvrement, ledit corps étant en PVC ou en PET, présentant les qualités suivantes :
- le marquage présente une densité de marquage relative supérieure à 1 Db,
- la feuille de recouvrement ne présente pas de zone de décollement vis à vis du dit corps.

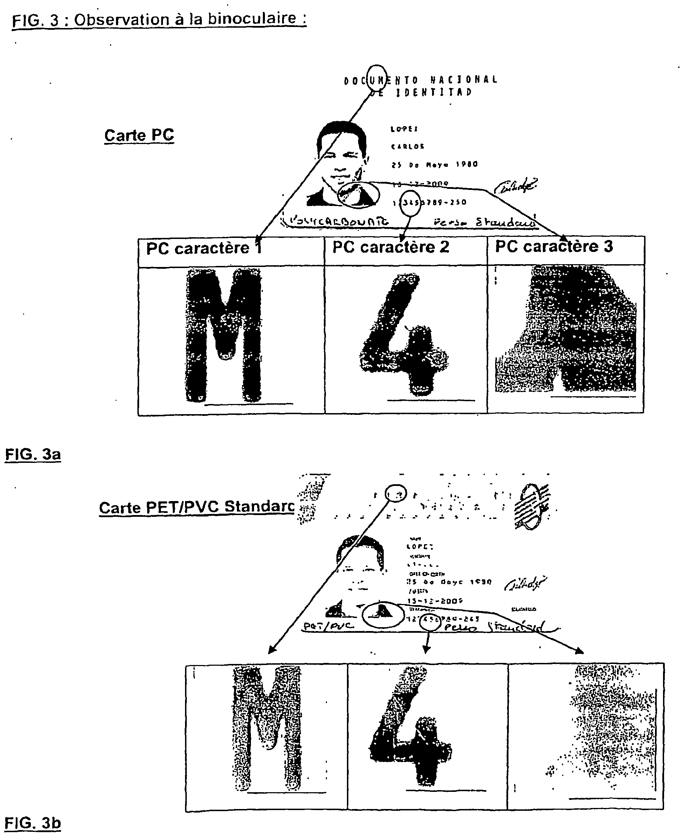

La figure 3 illustre les différences d'aspect visuel entre un support dont le corps est en PC (figure 3a) et un support dont le corps est en PET/PVC (figure 3b), les deux types de carte ayant subi le même procédé de marquage laser selon l'état de la technique.

On constate que la carte en PET/PVC présente un aspect visuel moins bon (densité de marquage et netteté moindre, et présence d'un relief accentué en surface au niveau du marquage laser).

Les marquages illustrés ici, et dans les figures qui suivent, ont été obtenus par marquage laser (inscriptions, photographies, etc.).

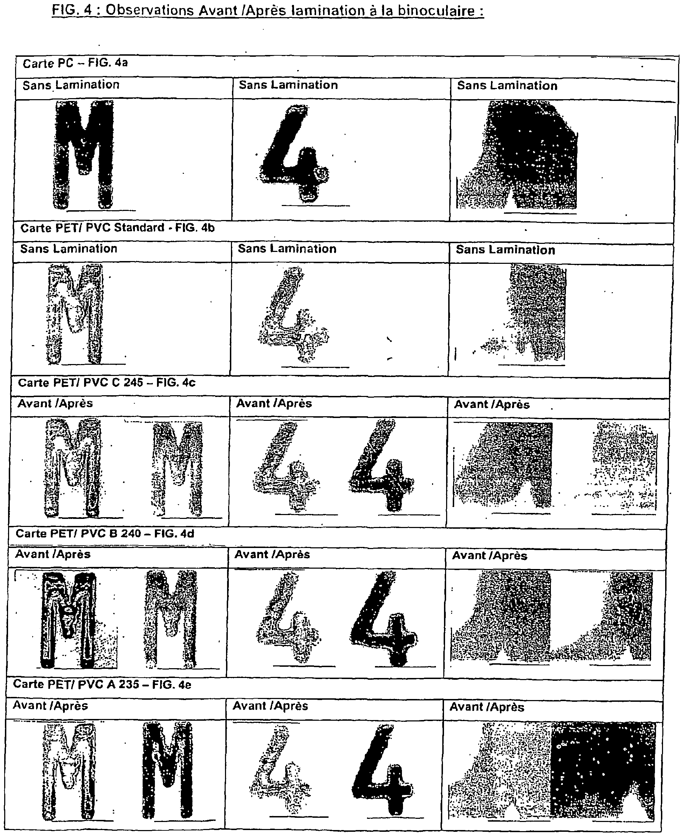

Les figures 4 à 6 illustrent les effets de l'invention, sur plusieurs cartes ayant subi les mêmes étapes d'attaque par laser dans les mêmes conditions.

La figure 4 illustre l'effet de la mise en oeuvre de l'invention - notamment en termes de densité de marquage et de netteté - en illustrant l'aspect visuel observé par binoculaire de cartes obtenues :
- Par un procédé de marquage par laser selon l'état de la technique, sur une carte en PC (figure 4a),
- Par un procédé de marquage par laser selon l'état de la technique, sur une carte en PET/PVC (figure 4b),
- Par un procédé de marquage par laser selon l'invention, sur trois cartes en PET/PVC (figures 4c à 4e). Dans le cas de ces figures, on a représenté l'observation faite :
   ➢ « avant » (c'est à dire après l'attaque par laser mais avant lamination - partie gauche de la figure), et
   ➢ « après » (après lamination - on comprend donc que dans ce cas la lamination n'a pas été effectuée en même temps que l'attaque laser - partie droite de la figure).

La figure 5 illustre l'effet de la mise en oeuvre de l'invention - notamment en termes de déformation - en illustrant l'aspect visuel observé par microscope de cartes obtenues :
• Par un procédé de marquage par laser selon l'état de la technique, sur une carte en PC (figure 5a). On n'observe dans ce cas pas de déformation de la matière,
• Par un procédé de marquage par laser selon l'état de la technique, sur une carte en PET/PVC (figure 5b). On observe ici quelques points plus denses qui traduisent une altération de la matière,
• Par un procédé de marquage par laser selon l'invention, sur trois cartes en PET/PVC (figures 5c à 5e). Dans le cas de ces figures, on a représenté l'observation faite :
   ➢ Après une étape de lamination (partie gauche de la figure), et
   ➢ Sans étape de lamination (c'est à dire en mettant en oeuvre un procédé selon l'état de la technique - partie droite de la figure). Ces figures font apparaître des défauts dans le cas du procédé de l'état de la technique, défauts variables en fonction du type précis de PET/PVC utilisé pour le corps de la carte.

La figure 6 illustre enfin de manière quantitative la déformation de la surface d'un support résultant d'une personnalisation laser réalisée selon l'état de la technique.

Dans la section haute de cette figure, la partie gauche illustre la zone d'une carte qui est caractérisée par un appareil de mesure de profil au laser (profilomètre). La partie droite représente la déformation qui est traduite en ordonnées, en microns.

La figure 6a illustre la déformation observée suite à un marquage laser selon l'état de la technique dans le cas d'une carte en PC. On n'observe pas de déformation mesurable par rapport au profil de référence (qui est illustré sur la courbe de cette figure).

La figure 6b illustre la déformation observée suite à un marquage laser selon l'état de la technique sur une carte en PET/PVC. On observe une déformation significative de l'ordre de 3 µm pouvant dépasser plusieurs dizaines de µm (fig.6e).

Les figures 6c à 6e illustrent les déformations obtenues sur trois cartes en PET/PVC. Dans le cas de ces figures, on a représenté les mesures faites :
➢ Sans étape de lamination (c'est à dire en mettant en oeuvre un procédé selon l'état de la technique - partie gauche de la figure). Ces figures font apparaître des déformations sensibles dans le cas du procédé de l'état de la technique, et
➢ Après une étape de lamination (partie droite de la figure).

Bien entendu, les avantages illustrés ci-dessus et obtenus sur des supports tels que des cartes en PET/PVC sont également intéressants pour tous types de supports.

Il est notamment possible de mettre en oeuvre l'invention sur des cartes plastiques en PC, ce qui permettra également d'augmenter la qualité du marquage (densité de marquage et netteté encore augmentées).

Le support de l'invention peut comprendre un corps en un matériau autre que du plastique, notamment du papier naturel ou synthétique, du bois, etc ..., ainsi qu'au moins une feuille de recouvrement transparente.

L'invention permet d'obtenir notamment des documents plastifiés tels que des cartes d'identité, permis de conduire, badges, passeport...

Comme on l'a déjà évoqué ci-dessus, l'invention est l'invention est particulièrement intéressante économiquement pour le marquage de support dont le matériau de corps et/ou de feuille de recouvrement a une température de ramollissement nettement inférieure à celle du PC (par exemple inférieure d'environ 20 °C).

## Revendications

1. Procédé de marquage par laser d'un support comprenant un corps et une feuille de recouvrement, ledit procédé comprenant un marquage de personnalisation réalisé par une attaque par un faisceau d'un laser du corps du support à travers l'épaisseur de la feuille de recouvrement, procédé **caractérisé en ce qu'**il comprend une étape de lamination du support pendant ou après le marquage au laser, ladite étape de lamination consistant à appliquer une pression sur le support avec apport d'énergie thermique au niveau de la zone de marquage, pour réduire ou éviter des déformations de la feuille de recouvrement résultant de ladite attaque, ladite lamination étant réalisée uniquement sur les régions du support comportant un marquage par laser.

2. Procédé selon la revendication précédente, **caractérisé en ce que** ledit support est un support plastique.

3. Procédé selon l'une des revendications précédentes, **caractérisé en ce que** ladite lamination est réalisée par des moyens de lamination statique.

4. Procédé selon la revendication précédente, **caractérisé en ce que** ladite lamination est réalisée en même temps que ladite attaque par laser, le faisceau du laser traversant lesdits moyens de lamination et le laser réalisant en outre l'apport d'énergie thermique.

5. Procédé selon l'une des deux revendications précédentes, **caractérisé en ce que** ladite lamination est réalisée par pressage statique du support entre des plaques de lamination.

6. Procédé selon la revendication précédente, **caractérisé en ce que** ladite lamination est réalisée à une température supérieure à la température de ramollissement d'au moins une des matières qui est au contact du marquage laser.

7. Procédé selon l'une des revendications 1 à 3, **caractérisé en ce que** ladite lamination est réalisée par des moyens de lamination dynamique permettant la lamination du support pendant que celui-ci défile par rapport auxdits moyens de lamination.

8. Procédé selon la revendication précédente **caractérisé en ce que** ladite lamination est réalisée par pressage entre deux rouleaux, le support défilant entre lesdits rouleaux.

9. Application d'un procédé selon une des revendications précédentes au marquage d'un support comprenant un corps et une feuille de recouvrement, et dont le corps et/ou la feuille de recouvrement est (sont) en un matériau dont la température de ramollissement est inférieure d'au moins 20°C à celle du polycarbonate.

10. Application selon la revendication précédente **caractérisée en ce que** ledit matériau du corps a une température de ramollissement inférieure à 140°C.

11. Application selon la revendication précédente **caractérisée en ce que** ledit matériau du corps est du polyéthylène téréphtalate ou du polychlorure de vinyle.

## Claims

1. A method for laser marking a substrate including a body and a coating sheet, with said method including a customization marking executed by engraving with a laser beam the substrate body through the thickness of the coating sheet, such method being **characterized in that** it includes a step of laminating the substrate during or after the laser marking, with said step of laminating consisting in applying a pressure onto a substrate with the supply of a thermal energy at the marking area, in order to reduce or prevent deformations of the coating sheet resulting from said engraving, with said lamination being executed on the regions of the substrate including a laser marking only.

2. A method according to the preceding claim, **characterized in that** said substrate is a plastic substrate.

3. A method according to one of the preceding claims, **characterized in that** said lamination is executed by static laminating means.

4. A method according to the preceding claim, **characterized in that** said lamination is executed simultaneously with said laser engraving, with the laser beam travelling through said laminating means and the laser further providing the thermal energy supply.

5. A method according to one of the two preceding claims, **characterized in that** said lamination is executed by the static pressing of the substrate between lamination plates.

6. A method according to the preceding claim, **characterized in that** said lamination is executed at a temperature above the softening temperature of at least one of the materials which comes in contact with the laser marking.

7. A method according to one of claims 1 to 3, **characterized in that** said lamination is executed by dynamic laminating means enabling the lamination of the substrate during the motion thereof with respect to said laminating means.

8. A method according to the preceding claim, **characterized in that** said lamination is executed by pressing between two rolls, with the substrate moving between said rolls.

9. The application of a method according to one of the preceding claims to the marking of a substrate including a body and a coating sheet, and the body and/or the coating sheet of which is (are) made of a material, the softening temperature of which is lower than that of polycarbonate by at least 20°C.

10. The application according to the preceding claim, **characterized in that** said body material has a softening temperature under 140°C.

11. The application according to the preceding claim, **characterized in that** said body material is polyethylene terephtalate or polyvinyl chloride.

## Patentansprüche

1. Verfahren für die Lasermarkierung eines Trägers, bestehend aus einem Körper und einer Abdeckfolie, wobei das genannte Verfahren eine Personalisierungsmarkierung umfasst, die durch einen Angriff per Laserstrahl auf den Träger des Körpers durch die Dicke der Abdeckfolie hindurch hergestellt wird, **dadurch gekennzeichnete**s Verfahren, dass es einen Walzschritt des Trägers während oder nach der Lasermarkierung umfasst, wobei der genannte Walzschritt darin besteht, einen Druck auf den Träger auszuüben anhand einer Wärmeenergiezufuhr auf die Markierungszone, um Verformungen der Abdeckfolie zu reduzieren oder zu vermeiden, die nach dem genannten Angriff entstehen, wobei das genannte Walzen nur auf denjenigen Bereichen des Trägers stattfindet, die eine Lasermarkierung aufweisen.

2. Verfahren gemäß dem vorangehenden Anspruch, **dadurch gekennzeichnet, dass** der genannte Träger ein Kunststoffträger ist.

3. Verfahren gemäß einem der vorangehenden Ansprüche, **dadurch gekennzeichnet, dass** das genannte Walzen mit statischen Walzmitteln durchgeführt wird.

4. Verfahren gemäß dem vorangehenden Anspruch, **dadurch gekennzeichnet, dass** das genannte Walzen gleichzeitig erfolgt mit dem genannten Angriff per Laser, wobei der Laserstrahl die genannten Walzmittel durchquert, und wobei der Laser ferner die Wärmeenergiezufuhr gewährleistet.

5. Verfahren gemäß einem der beiden vorangehenden Ansprüche, **dadurch gekennzeichnet, dass** das genannte Walzen durch statisches Zusammenrücken des Trägers zwischen Walzplatten erfolgt.

6. Verfahren gemäß dem vorangehenden Anspruch, **dadurch gekennzeichnet, dass** das genannte Walzen bei einer höheren Temperatur erfolgt als die Erweichungstemperatur einer der Werkstoffe, der sich in Kontakt mit der Lasermarkierung befindet.

7. Verfahren gemäß einem der Ansprüche 1 bis 3, **dadurch gekennzeichnet, dass** das genannte Walzen durchgeführt wird mit dynamischen Walzmitteln, die das Walzen des Trägers ermöglichen, während er durch die genannten Walzmittel läuft.

8. Verfahren nach dem vorangehenden Anspruch, **dadurch gekennzeichnet, dass** das genannte Walzen durch Zusammenrücken zwischen zwei Rollen erfolgt, wobei der Träger zwischen den genannten Rollen durchläuft.

9. Anwendung eines Verfahrens gemäß einem der vorangehenden Ansprüche für die Markierung eines Trägers bestehend aus einem Körper und einer Abdeckfolie, und dessen Körper und/oder Abdeckfolie aus einem Material besteht/bestehen, dessen Erweichungstemperatur mindestens 20°C weniger beträgt als diejenige von Polykarbonat.

10. Anwendung gemäß dem vorangehenden Anspruch, **dadurch gekennzeichnet, dass** das genannte Material des Körpers eine Erweichungstemperatur von weniger als 140°C hat.

11. Anwendung gemäß dem vorangehenden Anspruch, **dadurch gekennzeichnet, dass** das genannte Material des Körpers Terephtalat-Polyethylen oder Vinyl-Polychlorid ist.
